# EUROPEAN PATENT APPLICATION

(11) **EP 2 833 354 A1**
(43) Date of publication of application: **04.02.2015**
(21) Application number: 13768963.4
(22) Date of filing: 07.03.2013
(51) Int. Cl.: G09G 5/00, G09G 5/36, G06F 3/14, G06F 3/153

(54) **INFORMATION DISPLAY DEVICE**

(30) Priority: 28.03.2012 JP 2012074532
(71) Applicant: Panasonic Corporation, Kadoma-shi, Osaka 571-8501 (JP)
(72) Inventor: NISHIMURA, Kenji, Chuo-ku, Osaka 540-6207 (JP); MORI, Toshiaki, Chuo-ku, Osaka 540-6207 (JP); SATO, Junichi, Chuo-ku, Osaka 540-6207 (JP)
(74) Representative: Schwabe - Sandmair - Marx
(86) International application number: PCT/JP2013/001475
(87) International publication number: WO 2013/145580

(57) **Abstract**

When display of an image that is sent from a portable terminal (101) for a portable screen is divided into screens for two vehicle mounted terminals, an image receiving unit A (21) of a vehicle mounted terminal A (102) receives image data necessary for screen display on both the vehicle mounted terminals from the portable terminal (101) and stores image data necessary for a vehicle mounted terminal B (103) in a buffer memory unit (23). Thereafter, a cut-out processing unit (25) cuts out the image data for the display screen of the vehicle mounted terminal A (102) and stores the same in the buffer memory (23). Furthermore, an image transmission unit A (26) provides image data necessary for screen display by the vehicle mounted terminal B (103) when required by the vehicle mounted terminal B (103).

## Description

### Technical Field

The present invention relates to an information display apparatus that displays a screen display content of a mobile terminal on screens of a plurality of in-vehicle terminals.

### Background Art

As display apparatuses that provide users with geographical information, music information, Internet information, or the like, in-vehicle or portable car navigation apparatuses, or information terminal apparatuses have been widely spread. In recent years, car navigation apparatuses capable of displaying an image on a plurality of display apparatuses and in-vehicle display control apparatuses that display screen data generated by a mobile terminal apparatus on an in-vehicle display have been known (see, Patent Literatures (hereinafter, abbreviated as PTLs) 1 and 2, for example).

### Citation List

### Patent Literature

PTL 1
   Japanese Patent Application Laid-Open No. 2005-043695 (Claim 1 and FIG. 1)
PTL 2
   Japanese Patent Application Laid-Open No. 2009-281991 (Claim 1 and FIG. 1)

### Summary of Invention

### Technical Problem

However, in the information display apparatus according to the related art, a screen of a mobile terminal is divided into a plurality of still images, and transferred to in-vehicle terminals, respectively, and thus the screen of the mobile terminal can be displayed in a divided manner on screens of two in-vehicle terminals, but when display regions of the two in-vehicle terminals overlap each other, the mobile terminal needs to transmit rectangular screen data including an overlapping portion to both of the in-vehicle terminals. Further, in a case where display-content updating intervals of the two in-vehicle terminals are not in synchronization with each other, even when the screen content of one of the in-vehicle terminals is to be updated, the screen data needs to be transmitted to both of the in-vehicle terminals, so that there arises a problem in that the transfer amount of image data increases. Further, when it is necessary to perform a vehicle running regulation, the same process is executed in both of the in-vehicle terminals, and thus there arises a problem in that the processing load increases.

It is an object of the present invention to provide an information display apparatus capable of minimizing the transfer amount of image data and reducing a running regulation processing load when a screen of a mobile terminal is displayed in a divided manner on screens of two in-vehicle terminals.

### Solution to Problem

In order to achieve the object mentioned above, an information display apparatus according to the present invention is configured in the following manner. More specifically, the information display apparatus according to the present invention is an information display apparatus that displays, in a divided manner, an image of a mobile screen transmitted from a mobile terminal on a screen of a first in-vehicle terminal and a screen of a second in-vehicle terminal, the apparatus including: an image data acquiring section that collectively acquires screen data transmitted from the mobile terminal in the first in-vehicle terminal; a screen data distributing section that distributes the screen data acquired through the image data acquiring section into screen data necessary for displaying the screen of the first in-vehicle terminal and screen data necessary for displaying the screen of the second in-vehicle terminal; a distributed image storing section that stores the screen data distributed by the screen data distributing section; and an image data transmitting section that transmits, in response to a request from the second in-vehicle terminal, image data corresponding to the request from among the distributed image data stored in the distributed image storing section to the second in-vehicle terminal.

### Advantageous Effects of Invention

According to the present invention, when a screen of a mobile terminal is displayed in a divided manner on screens of two in-vehicle terminals, the transfer amount of image data can be minimized even when display regions of the two in-vehicle terminals overlap each other or even when display-content updating intervals of the two in-vehicle terminals are not in synchronization with each other. Further, it is possible to reduce a running regulation processing load.

### Brief Description of Drawings

FIG. 1 is a block diagram illustrating a configuration of an information display apparatus according to an embodiment of the present invention;
FIG. 2 is an explanatory diagram illustrating a display screen of a mobile terminal of an information display apparatus according to an embodiment of the present invention;
FIG. 3 is an explanatory diagram illustrating a display screen of in-vehicle terminal A of an information display apparatus according to an embodiment of the present invention;
FIG. 4 is an explanatory diagram illustrating a display screen of in-vehicle terminal B of an information display apparatus according to an embodiment of the present invention; and
FIG. 5 is a flowchart illustrating a processing flow of an information display apparatus according to an embodiment of the present invention.

### Description of Embodiments

Hereinafter, an information display apparatus according to an embodiment of the present invention will be described in detail with reference to the appended drawings. In all drawings for describing an embodiment, in principle, the same components are denoted by the same reference numerals, and a description thereof will not be repeated.

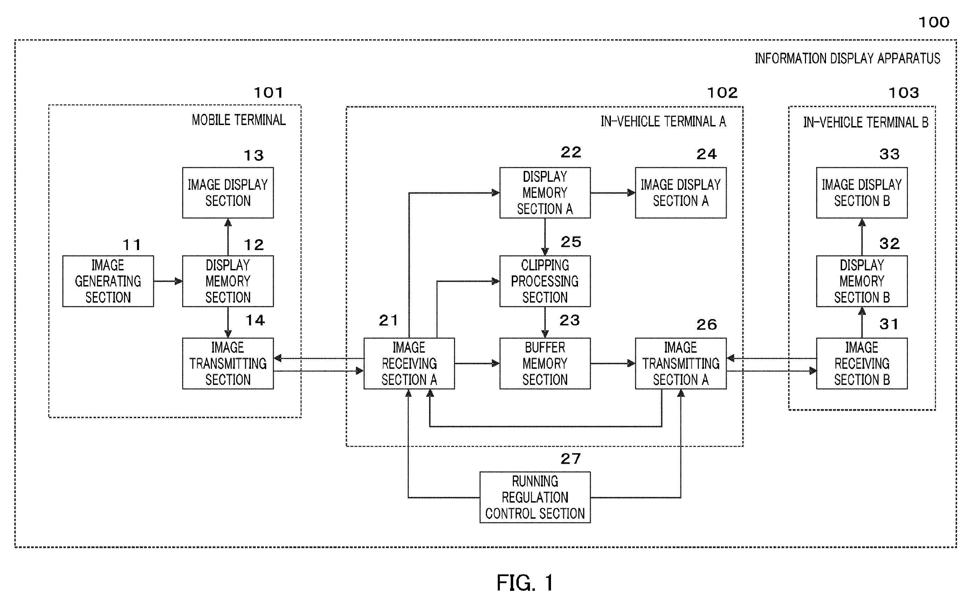

FIG. 1 is a block diagram illustrating a configuration of an information display apparatus according to an embodiment of the present invention. Referring to FIG. 1, information display apparatus 100 includes single mobile terminal 101 and two in-vehicle terminals, that is, in-vehicle terminal A (first in-vehicle terminal) 102 and in-vehicle terminal B (second in-vehicle terminal) 103. Image generating section 11 of mobile terminal 101 executes an application program such as a vehicle navigator, a music player, or a browser, and generates image data to be displayed on a mobile screen. Display memory section 12 stores the image data generated by image generating section 11.

Image display section 13 causes image data stored in display memory section 12 to be displayed on a mobile screen. Image transmitting section 14 transmits image data of a region requested from in-vehicle terminal A 102 among image data stored in display memory section 12 to in-vehicle terminal A 102.

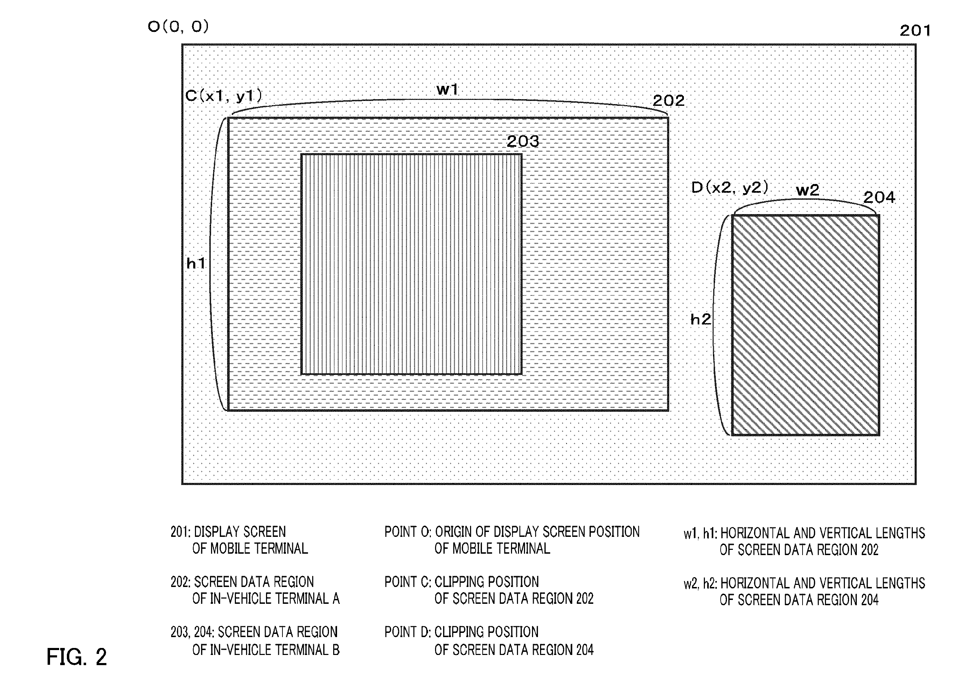

FIG. 2 is an explanatory diagram illustrating a display screen of a mobile terminal of an information display apparatus according to an embodiment of the present invention. Referring to FIG. 2, display screen 201 of mobile terminal 101 has a rectangular shape including screen data region 202 of in-vehicle terminal A 102 and screen data regions 203 and 204 of in-vehicle terminal B 103. When point O (0, 0) of FIG. 2 is defined as the origin of a position of display screen 201 of mobile terminal 101, image transmitting section 14 of mobile terminal 101 receives, from in-vehicle terminal A 102, a request for point C (x1, y1) that is a clipping position of screen data region 202 of in-vehicle terminal A 102 and horizontal and vertical lengths (w1, h1) of screen data region 202 of in-vehicle terminal A 102 as screen data region 202 of in-vehicle terminal A 102. Further, image transmitting section 14 of mobile terminal 101 receives, from in-vehicle terminal A 102, a request for point D (x2, y2) that is a clipping position of screen data region 204 of in-vehicle terminal B 103 and horizontal and vertical lengths (w2, h2) of screen data region 204 of in-vehicle terminal B 103 as screen data region 204 of in-vehicle terminal B 103.

Referring back to FIG. 1, image receiving section A (an image data acquiring section and an image data distributing section) 21 of in-vehicle terminal A 102 requests mobile terminal 101 to provide regions necessary for displaying the screen of in-vehicle terminal A 102 and in-vehicle terminal B 103 according to a running state of a vehicle, receives image data transmitted from mobile terminal 101, and distributes necessary image data to in-vehicle terminal A 102 and in-vehicle terminal B 103. In other words, image receiving section A 21 distributes image data of screen data region 203 and screen data region 204 of in-vehicle terminal B 103 illustrated in FIG. 2 to in-vehicle terminal A 102 and in-vehicle terminal B 103, respectively.

Display memory section A (distributed image storing section) 22 stores image data necessary for displaying the screen of in-vehicle terminal A 102 distributed by image receiving section A 21, and buffer memory section (clipped image storing section) 23 stores image data necessary for display the screen of in-vehicle terminal B 103 distributed by image receiving section A 21. Image display section A 24 causes the image data stored in display memory section A 22 to be displayed on the screen of in-vehicle terminal A. Clipping processing section (image data clipping section) 25 clips image data of a region necessary for displaying the screen of in-vehicle terminal B 103 requested from image receiving section A 21 from the image data stored in display memory section A 22, and causes the clipped image data to be stored in buffer memory section 23.

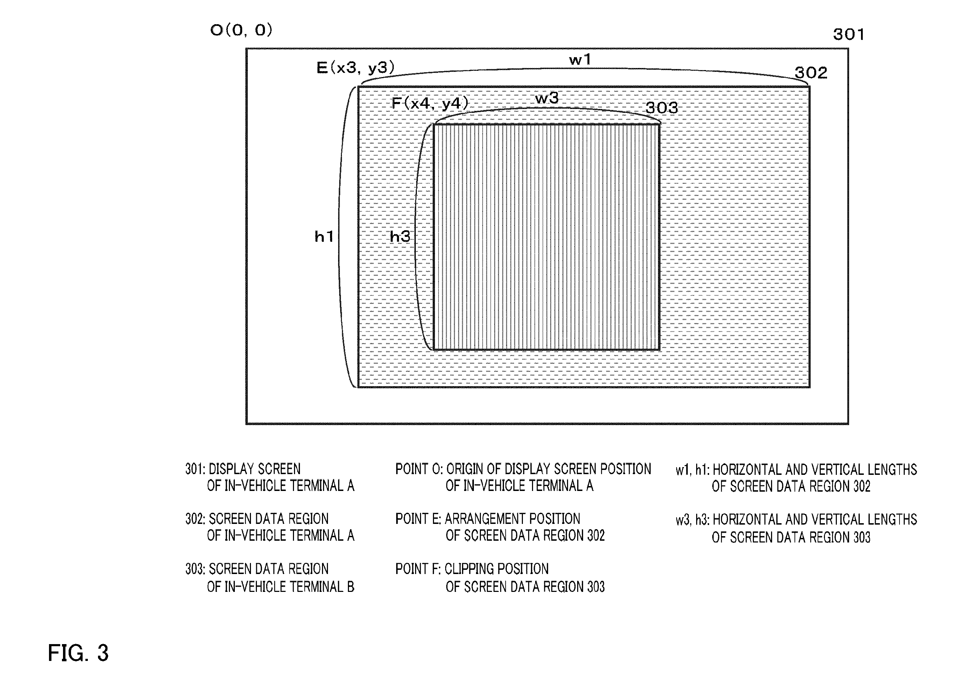

FIG. 3 is an explanatory diagram illustrating a display screen of in-vehicle terminal A of an information display apparatus according to an embodiment of the present invention. Referring to FIG. 3, display screen 301 of in-vehicle terminal A 102 has a rectangular shape including screen data region 302 of in-vehicle terminal A 102 and screen data region 303 of in-vehicle terminal B 103. When point O (0, 0) is defined as the origin of a position of the display screen of in-vehicle terminal A 102, display memory section A 22 stores screen data region 302 of in-vehicle terminal A 102 using an arrangement of point E (x3, y3) that is an arrangement position of screen data region 302 of in-vehicle terminal A 102 and horizontal and vertical lengths (w3, h3) of screen data region 303 of in-vehicle terminal B 103. Further, clipping processing section 25 clips screen data region 303 of in-vehicle terminal B 103 at a position of point F (x4, y4) that is a clipping position of screen data region 303 of in-vehicle terminal B 103 and horizontal and vertical lengths (w3, h3) of screen data region 303 of in-vehicle terminal B 103, and causes the clipped region to be stored in buffer memory section 23.

Referring back to FIG. 1, image transmitting section A (image data transmitting section) 26 requests image receiving section A 21 to provide a region necessary for displaying the screen requested from in-vehicle terminal B 103, and transmits image data stored in buffer memory section 23 to in-vehicle terminal B 103 according to the running state of a vehicle. Running regulation control section (distribution method changing section, and screen information changing section) 27 determines the running state of a vehicle based on in-vehicle sensor information such as a speed or an ON/OFF state of an emergency brake, and transfers the running state to image receiving section A 21 and image transmitting section A 26.

Image receiving section B 31 of in-vehicle terminal B 103 requests in-vehicle terminal A 102 to provide a region necessary for displaying the screen of in-vehicle terminal B 103, and receives image data transmitted from in-vehicle terminal A 102. Display memory section B 32 stores the image data received by image receiving section B 31, and image display section B 33 causes the image data stored in display memory section B 32 to be displayed on the screen of in-vehicle terminal B 103.

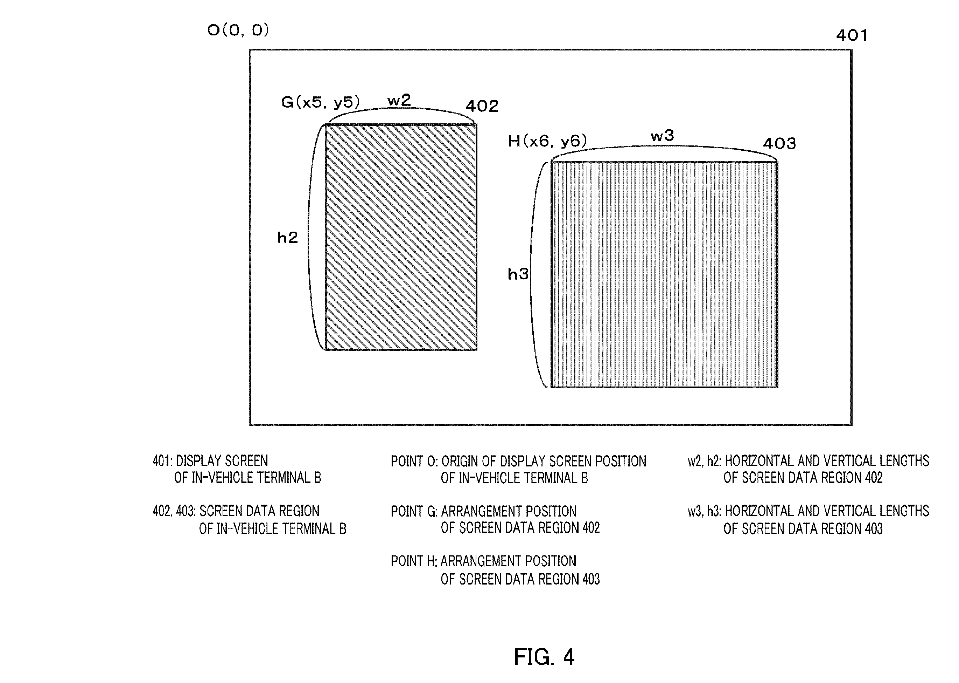

FIG. 4 is an explanatory diagram illustrating a display screen of in-vehicle terminal B 103 of an information display apparatus according to an embodiment of the present invention. Referring to FIG. 4, display screen 401 of in-vehicle terminal B 103 has a rectangular shape including screen data region 402 and screen data region 403 of in-vehicle terminal B 103. When point O (0,0) is defined as the origin of a position of the display screen of in-vehicle terminal B 103, image receiving section B 31 causes screen data region 402 of in-vehicle terminal B 103 and screen data region 403 of in-vehicle terminal B 103 to be stored in display memory section B 32 using an arrangement of point G (x5, y5) that is an arrangement position of screen data region 402 of in-vehicle terminal B 103 and horizontal and vertical lengths (w2, h2) of screen data region 402 of in-vehicle terminal B 103 and an arrangement of point H (x6, y6) that is an arrangement position of screen data region 403 of in-vehicle terminal B 103 and horizontal and vertical lengths (w3, h3) of screen data region 403 of in-vehicle terminal B 103.

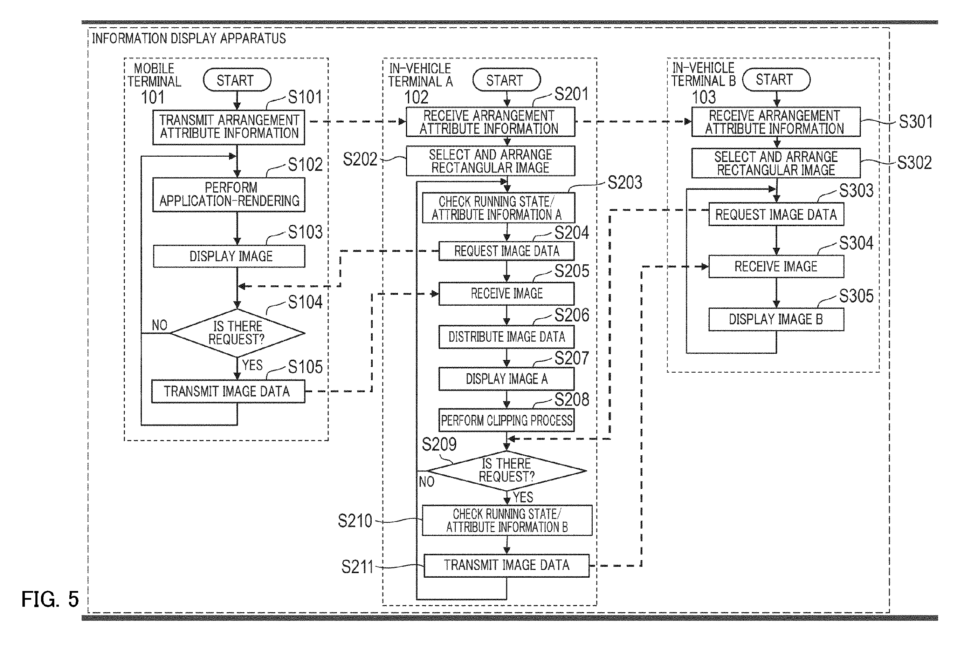

A processing operation of the information display apparatus having the above configuration will be described with reference to a processing flow of a flowchart. FIG. 5 is a flowchart illustrating the processing flow of information display apparatus 100 according to an embodiment of the present invention. In FIG. 5, steps S101 to S105 represent a process of mobile terminal 101, steps S201 to S211 represent a process of in-vehicle terminal A 102, and a process of steps S301 to S305 represent a process of in-vehicle terminal B 103.

First, the process of mobile terminal 101 will be described with reference to steps S101 to S105. First, mobile terminal 101 performs an arrangement attribute information transmission process in step S101. Here, when an application program of mobile terminal 101 is activated, first, arrangement information and attribute information of a predetermined mobile screen are transmitted from mobile terminal 101 to in-vehicle terminal A 102. The arrangement information is defined as image information including horizontal and vertical sizes (the number of pixels) and upper left coordinate values of a plurality of rectangular images configuring a mobile screen. The attribute information is defined as a type (a map, a moving image, an operation button, a menu, or the like) of a rectangular image configuring a mobile screen.

Then, in step S102, image generating section 11 of mobile terminal 101 executes an application program such as a car navigation, a music player, or a browser, generates image data to be displayed on a mobile screen, and writes the image data in display memory section 12.

Then, in step S103, image display section 13 reads application-rendering image data generated in step S102 from display memory section 12, and causes the image data to be displayed on the mobile screen. Then, in step S104, image transmitting section 14 checks whether there is a request for image data from in-vehicle terminal A 102, and the process returns to step S102 when it is determined that there is no request.

Meanwhile, when it is determined in step S104 that there is a request for image data from in-vehicle terminal A 102, in step S105, image transmitting section 14 transmits a requested region of the image data generated in step S102 from display memory section 12 to in-vehicle terminal A 102, and the process returns to step S102.

Then, the process of in-vehicle terminal A 102 will be described with reference to steps S201 to S211. First, in-vehicle terminal A 102 performs an arrangement attribute information reception process in step S201, and performs a rectangular image selection arrangement process in step S202. In the process of step S201 and step S202, in-vehicle terminal A 102 receives the arrangement information and the attribute information of the mobile screen from mobile terminal 101. The user selects a rectangular image that is desired to be displayed on in-vehicle terminal A 102, and defines the arrangement information as a "region necessary for displaying the screen" of in-vehicle terminal A 102. Further, the user designates an arrangement position (AX, AY) on the screen of in-vehicle terminal A 102 for the selected rectangular image.

Here, when the rectangular image data clipped from the mobile screen is displayed on the screen of in-vehicle terminal A 102 according to the "region necessary for displaying the screen," the rectangular image data is defined as "necessary image data" in in-vehicle terminal A 102. Further, when the "necessary image data" of in-vehicle terminal A is arranged at coordinate values (AX, AY) used as the origin at the upper left of the screen of in-vehicle terminal A, the "necessary image data" and the coordinate values (AX, AY) are defined as "necessary screen data" of in-vehicle terminal A. Then, the arrangement information and the attribute information of the mobile screen are transmitted to in-vehicle terminal B 103.

Then, in step S203, in-vehicle terminal A 102 performs a running state/attribute information check A process. Here, whether or not the screen of in-vehicle terminal A 102 includes attribute information (for example, a moving image) that is prohibited from being displayed during running of the vehicle is checked. When the screen of in-vehicle terminal A 102 includes the attribute information that is prohibited from being displayed during running of the vehicle, a determination is made "according to the running state." In other words, when the running state received from the running regulation control section indicates "during stop of the vehicle," it is determined to be a "region necessary for displaying the screen" of in-vehicle terminal A 102, and when the running state indicates "during running of the vehicle," it is determined to be a "region unnecessary for displaying the screen" of in-vehicle terminal A 102.

Then, in step S204, image receiving section A 21 requests mobile terminal 101 to provide regions necessary for displaying the screen of in-vehicle terminal A 102 and in-vehicle terminal B 103 according to the running state of a vehicle determined by running regulation control section 27.

Then, in step S205, image receiving section A 21 receives the image data transmitted from mobile terminal 101 in step S105. Then, in step S206, image receiving section A 21 distributes the image data received in step S205 according to the display regions of in-vehicle terminal A 102 and in-vehicle terminal B 103, and writes the distributed image data in display memory section A 22 and buffer memory section 23.

Then, in step S207, image display section A 24 causes the image data stored in display memory section A 22 in step S206 to be displayed on the screen of in-vehicle terminal A 102. Then, in step S208, clipping processing section 25 clips the image data stored in display memory section A 22 in step S206 according to a region designated by image receiving section A 21, and writes the clipped image data in buffer memory section 23.

Then, in step S209, image transmitting section A 26 checks whether there is a request for image data from in-vehicle terminal B 103, and the process returns to step S203 when it is determined that there is no request. Meanwhile, when it is determined in step S209 that there is a request for image data from in-vehicle terminal B 103, in-vehicle terminal A 102 performs a running state/attribute information check B process in step S210. Here, whether or not the screen of in-vehicle terminal B 103 includes attribute information (for example, a moving image) that is prohibited from being displayed during running of the vehicle is determined. When the screen of in-vehicle terminal B 103 includes the attribute information that is prohibited from being displayed during running of the vehicle, a determination is made "according to the running state." In other words, when the running state received from the running regulation control section indicates "during stop of the vehicle," it is determined to be a "region necessary for screen display" of in-vehicle terminal B 103, and when the running state indicates "during running of the vehicle," it is determined to be a "region unnecessary for screen display" of in-vehicle terminal B 103.

Then, in step S211, image transmitting section A 26 transmits a region requested from in-vehicle terminal B 103 to image receiving section A 21. Further, image transmitting section A 26 transmits, to in-vehicle terminal B 103, image data of the region requested from in-vehicle terminal B 103 according to the running state of a vehicle determined by running regulation control section 27 from the image data stored in buffer memory section 23 written in step S206 and step S208, and then the process proceeds to step S203.

Then, the process of in-vehicle terminal B 103 will be described with reference to steps S301 to S305. First, in step S301 and step S302, in-vehicle terminal B 103 performs the arrangement attribute information reception process and the rectangular image selection arrangement process. Here, the arrangement information and the attribute information of the mobile screen are received from in-vehicle terminal A 102. The user selects a rectangular image that is desired to be displayed on in-vehicle terminal B 103, and defines the arrangement information as a "region necessary for screen display" of in-vehicle terminal B 103.

Further, the user designates an arrangement position (BX, BY) on the screen of in-vehicle terminal B 103 for the selected rectangular image. Here, when the rectangular image data clipped from the mobile screen is displayed on the screen of in-vehicle terminal B 103 according to the "region necessary for screen display," the rectangular image data is defined as "necessary image data" in in-vehicle terminal B 103. Further, when the "necessary image data" of in-vehicle terminal B 103 is arranged at coordinate values (BX, BY) used as the origin at the upper left of the screen of in-vehicle terminal B 103, the "necessary image data" and the coordinate values (BX, BY) are defined as "necessary screen data" of in-vehicle terminal B 103.

Then, in step S303, image receiving section B 31 requests in-vehicle terminal A 102 to provide a region necessary for displaying the screen of in-vehicle terminal B 103. Then, in step S304, image receiving section B 31 receives the image data transmitted from in-vehicle terminal A 102 in step S304, and writes the received image data in display memory section B 32.

Then, in step S305, image display section B 33 causes the image data stored in display memory section B 32 in step S304 to be displayed on the screen of in-vehicle terminal B 103, and then the process returns to step S303.

As described above, according to the information display apparatus of the present embodiment, when a screen of a mobile terminal is displayed in a divided manner on screens of two in-vehicle terminals, one in-vehicle terminal receives screen data necessary in both in-vehicle terminals from the mobile terminal, stores image data necessary in the other in-vehicle terminal in a buffer memory, and provides the image data when there is a request from the other in-vehicle terminal. Thus, even when display regions of the two in-vehicle terminals overlap or even when display-content updating intervals of the two in-vehicle terminals are not in synchronization with each other, the transfer amount of image data can be minimized. In addition, one in-vehicle terminal collectively performs the running regulation process, so that the running regulation processing load in the other in-vehicle terminal can be reduced.

It should be noted that, the functional blocks used in the description of the embodiment described above are typically implemented as LSI devices, which are integrated circuits. The functional blocks may be formed as individual chips, or a part or all of the functional blocks may be integrated into a single chip. The term "LSI" is used herein, but the terms "IC," "system LSI," "super LSI" or "ultra LSI" may be used as well depending on the level of integration. In addition, the circuit integration is not limited to LSI and may be achieved by dedicated circuitry or a general-purpose processor other than an LSI. After fabrication of LSI, a field programmable gate array (FPGA), which is programmable, or a reconfigurable processor which allows reconfiguration of connections and settings of circuit cells in LSI may be used. Moreover, should a circuit integration technology replacing LSI appear as a result of advancements in semiconductor technology or other technologies derived from the technology, the functional blocks could be integrated using such a technology. Another possibility is the application of biotechnology, for example.

The information display apparatus according to the present invention has been specifically described thus far based on the embodiment. The present invention, however, is not limited to the embodiment, and various modifications are possible within a scope not departing from the gist of the present invention.

The disclosure of the specification, drawings, and abstract included in Japanese Patent Application No. 2012-74532 filed on March 28, 2012 is incorporated herein by reference in its entirety.

### Industrial Applicability

The image display apparatus of the present invention brings about an effect capable of minimizing the transfer amount of image data and reducing a running regulation processing load when a screen of a mobile terminal is displayed in a divided manner on screens of two in-vehicle terminals, so that the image display apparatus of the present invention can be used in the fields of design and manufacturing of in-vehicle vehicle navigation apparatuses, information terminal apparatuses, portable navigation apparatuses, and information terminal apparatuses.

### Reference Signs List

11 Image generating section
12 Display memory section
13 Image display section
14 Image transmitting section
21 Image receiving section A
22 Display memory section A
23 Buffer memory section
24 Image display section A
25 Clipping processing section
26 Image transmitting section A
27 Running regulation control section
31 Image receiving section B
32 Display memory section B
33 Image display section B
100 Information display apparatus
101 Mobile terminal
102 In-vehicle terminal A (first in-vehicle terminal)
103 In-vehicle terminal B (second in-vehicle terminal)
201 Display screen of mobile terminal
202 Screen data region of in-vehicle terminal A
203, 204 Screen data region of in-vehicle terminal B
301 Display screen of in-vehicle terminal A
302 Screen data region of in-vehicle terminal A
303 Screen data region of in-vehicle terminal B
401 Display screen of in-vehicle terminal B
402, 403 Image data region of in-vehicle terminal B

## Claims

1. An information display apparatus that displays, in a divided manner, an image of a mobile screen transmitted from a mobile terminal on a screen of a first in-vehicle terminal and a screen of a second in-vehicle terminal, the apparatus comprising:
an image data acquiring section that collectively acquires screen data transmitted from the mobile terminal in the first in-vehicle terminal;
a screen data distributing section that distributes the screen data acquired through the image data acquiring section into screen data necessary for displaying the screen of the first in-vehicle terminal and screen data necessary for displaying the screen of the second in-vehicle terminal;
a distributed image storing section that stores the screen data distributed by the screen data distributing section; and
an image data transmitting section that transmits, in response to a request from the second in-vehicle terminal, image data corresponding to the request from among the distributed image data stored in the distributed image storing section to the second in-vehicle terminal.

2. The information display apparatus according to claim 1, further comprising:
an image data clipping section that clips the screen data of the first in-vehicle terminal based on screen information of the second in-vehicle terminal; and
a clipped image storing section that stores the screen data clipped by the image data clipping section.

3. The information display apparatus according to claim 1, further comprising a distribution method changing section that changes a screen data distribution method according to the presence or absence of a vehicle running regulation.

4. The information display apparatus according to claim 1, further comprising a screen information changing section that changes screen information of the second in-vehicle terminal according to the presence or absence of a vehicle running regulation.
